# EUROPEAN PATENT APPLICATION

(11) **EP 3 252 671 A1**
(43) Date of publication of application: **06.12.2017**
(21) Application number: 16172126.1
(22) Date of filing: 31.05.2016
(51) Int. Cl.: G06K 9/46, G06K 9/62

(54) **METHOD OF TRAINING A DEEP NEURAL NETWORK**

(71) Applicant: Siemens Healthcare GmbH, 91052 Erlangen (DE)
(72) Inventor: Kelm, Michael, 91052 Erlangen (DE); Pauly, Olivier, 80798 München (DE); Jerebko, Anna, 91353 Hausen (DE)

(57) **Abstract**

The invention describes a method of training a deep neural network (N) to perform a specific image processing task, which method comprises the steps of extracting a plurality of pseudo-targets (101_{PS}, ..., 105_{PS}) from a non-annotated set (DBₙₐ) of medical images; performing supervised pre-training on an initialized network (Nᵢₙᵢₜ) to obtain a pre-trained network (Nₚᵣₑ) with a pseudo-task specific top layer (L_{PTS}) ; replacing the pseudo-task specific layer (L_{PTS}) by a task-specific layer (L_{TS}); and performing supervised training on the pre-trained network (Nₚᵣₑ) using an annotated set (DB) of medical images.

## Description

The invention describes a method of training a deep neural network to perform a specific image processing task, and a training system realized to train a deep neural network to perform a specific image processing task.

A deep neural network (DNN) is an artificial neural network that has multiple hidden layers between the input and output. A deep neural network can model complex non-linear relationships and is generally trained to perform one or more specific tasks. Different types of deep neural networks have been developed for different tasks. For example, a convolutional neural network is suited to the task of processing visual two-dimensional data. The structures of deep neural networks can differ significantly, for example a convolutional neural network is based on the animal visual cortex and uses convolutional layers, whereas a deep belief network instead comprises several layers of hidden units, with connections between the layers but not between the units of the individual layers. Training of a DNN can be performed using a training set, and the quality of the training is determined by the quality of the training set.

In the field of medical image analysis, tasks of detecting and segmenting organs, anatomical structures, lesions, masses and other pathologies in a medical image are traditionally performed using computer-aided diagnosis systems. A deep neural network could be applied to perform such tasks, but there is an unmet need of very large annotated datasets. An annotated image can be an imaging volume such as a computer tomograph volume for which manual annotations (e.g. segmentations) have been performed and identified. However, annotating medical images is a tedious and time-consuming procedure. The training of such a DNN is therefore very difficult and very expensive. Furthermore, image related tasks can be very different, for example the task of identifying a lesion related to one class of tumor can be very different from the task of identifying a lesion related to a different class of tumor. However, any conventional network training approach may train the network using an image database that is not specifically related to the ultimate task that is to be performed by the network, so that the trained network cannot reach the degree of accuracy that would be required for real clinical applications.

Various strategies have been explored with the aim of overcoming the problem of not being able to access a publicly available massive training set for a specific task. A first approach involves the unsupervised layer-by-layer pre-training of a DNN using a large amount of data for which only very few annotations are available. This training approach starts from a visible bottom layer towards a hidden top layer, and the optimization is driven at each stage by reconstructing the input using an auto-encoder. This approach showed improvements in the performance for applications such as image classification or object detection in natural images. However, it is still a challenge to pre-train a convolutional neural network in an unsupervised fashion, and since there are no targets to drive the overall optimization, there is a risk of concept drift, i.e. the network "learns" an internal representation which is not relevant or which is suboptimal for the task of interest. Furthermore, there is no guarantee that the convolutional neural network would learn concepts that are useful for the actual task of interest.

Another approach uses an off-the-shelf pre-trained network, for example a network that has been pre-trained to recognize a certain class of object appearing in natural images (e.g. to recognize a certain animal, a certain object, etc.). Pre-training is done using a publicly available database (e.g. ImageNet) that contains a large number of images, usually photographs, of common objects. For a medical imaging task, researchers could use such a pre-trained network and fine-tune it for a specific task by using back-propagation. For instance, in the context of breast lesion segmentation, it has been proposed to use an off-the-shelf DNN architecture and to fine-tune it for the task of breast lesion detection by using a publicly available dataset. While this approach shows interesting results, the learned parameters of the DNN are not specific to a mammogram modality and not specific to the task of lesion detection/segmentation. This is because the training process of a DNN only ensures detection of a local optimum in the neighborhood of an initial set of parameters. In other words, fine-tuning the DNN by changing the top hidden layers might enable it to adapt to a new task, but it cannot alter the lower layers that encode the previously learned visual features.

Another approach involves performing a network training step without any pre-training. This approach has been observed to give satisfactory results when a huge dataset of annotated images (e.g. an ImageNet database) is available for the training. However, in the context of medical images, there are no such publicly available huge annotated datasets. By training the network directly on only a limited dataset, e.g. in the magnitude of only several hundreds of annotated medical images, the network cannot learn to generalize and there is a significant risk of overfitting. This approach is therefore not useful in a real clinical setting. To avoid overfitting, so-called data augmentation can be performed to artificially increase the size of a training set by using arbitrary transformations of the original data, e.g. rotations, scaling and mirroring of the images. Such techniques can be used to good effect in some cases, for example in the context of glaucoma detection, cell detection, or pancreas segmentation in CT images. However, these techniques are unsuitable in the context of breast lesion segmentation, since the appearance of the structure to be segmented - in this case a lesion in breast tissue - can vary greatly.

As it stands, the use of a DNN to reliably and accurately perform breast lesion segmentation in a medial image would require a prohibitively large training data set to achieve the required degree of accuracy.

It is therefore an object of the invention to provide an improved method of training a deep neural network.

This object is achieved by the method of claim 1 of training a deep neural network; and by the neural network training system of claim 11.

According to the invention, the method of training a deep neural network to perform a specific image processing task comprises the steps of extracting a plurality of pseudo-targets from a non-annotated set of medical images; performing supervised pre-training on the initialized network to obtain a top layer comprising a pseudo-task specific layer; replacing the pseudo-task specific layer by a task-specific layer; and performing supervised training on the pre-trained network using an annotated set of medical images.

In the context of the invention, the expression "non-annotated set of medical images" is to be understood to mean that the initial dataset comprises essentially unlabelled medical images. An advantage of the method according to the invention is that the deep neural network can be trained on related but much simpler tasks where pseudo-targets - annotations or labels - can be gained from non-annotated or "raw" (medical) images very easily or even in a fully or partially automated fashion. A "raw" image may be understood as an image that has not been annotated, i.e. features that would be characteristic of the image-related task that is to be performed by the network have not been specifically identified and have not been labeled in the image.

The inventors have recognized the significance of being able to generate "pseudo-targets" that characterize global or local properties of the raw images to drive a pre-training process. Subsequently, the initialized and pre-trained deep neural network can be adapted to the specific task (object detection or segmentation), even if only a very small dataset of annotated image data is available for the supervised training step. In the context of the invention, a "pseudo-target" is to be understood as a label or annotation that is determined or inferred in a primarily automated manner. Certain simpler types of pseudo-target may also be determined manually.

In the method according to the invention, a transfer learning pipeline is used to train a strong deep neural network, even if the initial dataset is essentially non-annotated. The inventive system generates pseudo-targets for the non-annotated medical images and pre-trains a deep neural network using those pseudo-targets. This approach allows regression and classification tasks to be mixed. The resulting architecture and parameters can be then reused as strong initialization for learning an actual specific task, for example object detection or segmentation. The method according to the invention is significantly more accurate compared to a conventional approach of pre-training on images that are completely unrelated to the modality of interest. Instead, by using medical images that are directly related to the modality of interest, the information contained in the images is used to train the network in a supervised manner. This improves the learning process of the deep neural network, allowing it to learn relevant features specific to the modality of interest and to avoid concept drift.

According to the invention, the training system is realized to train a deep neural network to perform a specific image processing task and comprises a target generation module realized to extract a plurality of pseudo-targets from a set of non-annotated medical images, a pre-training module realized to perform supervised pre-training on an initialized deep neural network using the pseudo-targets; a task adaptation module realized to replace a pseudo-task specific layer of the pre-trained network by a task-specific layer; and a training module realized to perform supervised training on the pre-trained network.

An advantage of the inventive training system is that it can use a large database of readily available but non-annotated images to provide a trained convolutional neural network that is ready to accurately perform a specific diagnostic task.

Particularly advantageous embodiments and features of the invention are given by the dependent claims, as revealed in the following description. Features of different claim categories may be combined as appropriate to give further embodiments not described herein.

In the following, the network may be assumed to be a deep neural network such as a convolutional neural network. A supervised training procedure of such a DNN preferably comprises performing back-propagation and stochastic gradient descent.

The method according to the invention is particularly suitable for training a DNN to perform a medical imaging task. Preferably, the task-specific layer of the network preferably comprises a lesion-detection layer. In the following, without restricting the invention in any way, it may be assumed that the network is trained to perform a lesion detection task, preferably a breast lesion detection task. After the network training is complete, the network will be capable of accurately analyzing a medical image (e.g. a CT image) to determine whether or not a lesion is present.

The inventive method is based on an initial step of using a large database of non-annotated medial images that relate to the specific medical imaging task - for example, the database may comprise several thousands of non-annotated mammography images - and inferring pseudo-targets from these images. In order to be able to assess the quality of the training, the images of the database are usually divided into a training set and a validation set.

The dataset of non-annotated medical images can comprise two-dimensional or three-dimensional digital breast tomosynthesis (DBT) images. In a preferred embodiment of the invention, therefore, the method comprises an initial step of defining a top network layer to address a pseudo-task of inferring pseudo-targets on the basis of a DBT region.

The purpose of pseudo-targets is to drive the pre-training of the network to capture relevant visual characteristics of the image. A pseudo-target can be any property or parameter than can easily be inferred or determined from a medical image.

In a preferred embodiment of the invention, a pseudo-target characterizes a local image property. A local image property can be any of a gradient magnitude, a gradient orientation, a Laplacian of a Gaussian, a Canny edge, a local intensity statistic or a textural descriptor, etc. These types of property characterize salient structures within a medical image and are useful for the detection of objects in an image. Such properties therefore provide good constraints for the pre-training of a neural network.

In a further preferred embodiment of the invention, a pseudo-target comprises a set of projections of image sub-regions onto a basis computed by principal component analysis (PCA). To generate this type of pseudo-target, the intensity values of all image sub-regions across the training set are vectorised, and the Eigenvectors are computed using PCA. Then, a subset of the most relevant Eigenvectors is selected according to their Eigenvalues and used as a basis. All image sub-regions are then projected onto these Eigenvectors and the set of projected values can be used as pseudo-targets. Alternatively, sparsity constraints can be added during the computation of the Eigenvectors to ensure sparsity of the resulting pseudo-targets. Using this type of pseudo-target forces the DNN to learn a compact representation covering most of the variance of the data.

In a further preferred embodiment of the invention, a pseudo-target comprises an intensity value of a cluster centre.

Here, a pseudo-target is effectively the appearance of the cluster centres in the intensity space. The intensity values of all image sub-regions across the training set are vectorised and cluster centres are computed by using a K-means clustering algorithm. Each image sub-region can be then associated with its cluster centre, resulting in the quantization of the original sub-region intensity space. The intensity values of its associated cluster centre can be used as pseudo-targets. Using this type of pseudo-target will force the DNN to learn representations that are similar for image sub-regions that belong to clusters of similar appearance.

In a further preferred embodiment of the invention, a pseudo-target comprises a probability value relating to the visual appearance of an image sub-region.

Here, a pseudo-target is the likelihood that the original image sub-regions have been generated from certain modes or clusters of appearance. The intensity values of all image sub-regions across the training set are vectorised, and the parameters of a multivariate Gaussian mixture model are estimated using expectation-maximization. For all image sub-regions, their likelihood to belong to each mode can be computed and these probabilities are used as pseudo-targets. Using this type of pseudo-targets will force the network to learn the relationship of an image region to each cluster of appearance, as well as its likelihood given the training set.

In a further preferred embodiment of the invention, a pseudo-target comprises a global image property relating to the image, for example available clinical information such as the patient's age, body-mass index, etc.

In a further preferred embodiment of the invention, a pseudo-target is obtained from an existing segmentation system. The existing segmentation system can be another, previously established system for detecting/segmenting an object from a medical image. Even if the previous system only achieves a low level of accuracy, it can provide sufficient evidence to assist in the supervised pre-training of a deep learning architecture. For example, in a classification task, the use of predictions from the legacy system is limited to predictions that are positive or negative "for certain", i.e. with a high probability.

Any of the above pseudo-targets can be extracted automatically. Some of the simpler types of pseudo-target (e.g. patient age) may be entered manually. Pseudo-targets can be categories or continuous values, and can be one-dimensional or multi-dimensional. The pseudo-targets can be used alone, or can be combined.

In the subsequent network initialization step, a DNN is created and its weights are initialized randomly. The network is created on the basis of suitable parameters that define the network architecture, e.g. the number of layers, the type of layers, the number of filters/neurons per layer, etc. As indicated above, the final or top layer is designed to address the pseudo-task of inferring the pseudo-targets given an input DBT region.

Once initialization is complete, the supervised pre-training can commence. The training set comprises image sub-regions and their associated pseudo-targets. Preferably, the supervised training of the initialized network is done by back-propagation and stochastic gradient descent, or any other method that can find optimal network parameters according to an objective function. Here, the "objective function" is a pseudo-task which can be defined as the weighted combination of errors computed on the different types of pseudo-targets. This pseudo-task can be a regression or a classification task.

After completion of the training, the top hidden layer of the network, i.e. the pseudo-task specific layer is discarded. The remainder of the network architecture is kept intact. A new top layer addressing the specific task (e.g. lesion detection) is then inserted into the network and its weights are initialized randomly.

A final stage in construction of the network involves a further supervised training step, this time with an annotated dataset. The annotated dataset comprises image sub-regions which have already been annotated by suitable tags or labels. A label defines whether or not a sub-region belongs to the object of interest. For example, an image sub-region showing a certain type of tissue can have been labeled as belonging to a lesion. Using this annotated dataset, the pre-trained DNN can now be fine-tuned by using a suitable technique such as back-propagation and stochastic gradient descent to find the best set of network parameters, e.g. the weights and biases that characterize the functions of each neuron of the network.

After completion of the training, the resulting DNN can analyze a new "unseen" image to accurately infer the probability of belonging to an object of interest.

The invention can be realized as a computer program product comprising a computer program that is directly loadable into a memory of a control unit of a training system and which comprises program elements for performing steps of the method according to the invention when the computer program is executed by the control unit of the training system.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a schematic diagram illustrating the steps of the method according to the invention;
Fig. 2 shows a block diagram of a target generation module in an embodiment of a training system according to the invention;
Fig. 3 illustrates a supervised pre-training procedure in the method according to the invention;
Fig. 4 illustrates a task adaptation step in the method according to the invention.

In the diagrams, like numbers refer to like objects throughout. Objects in the diagrams are not necessarily drawn to scale.

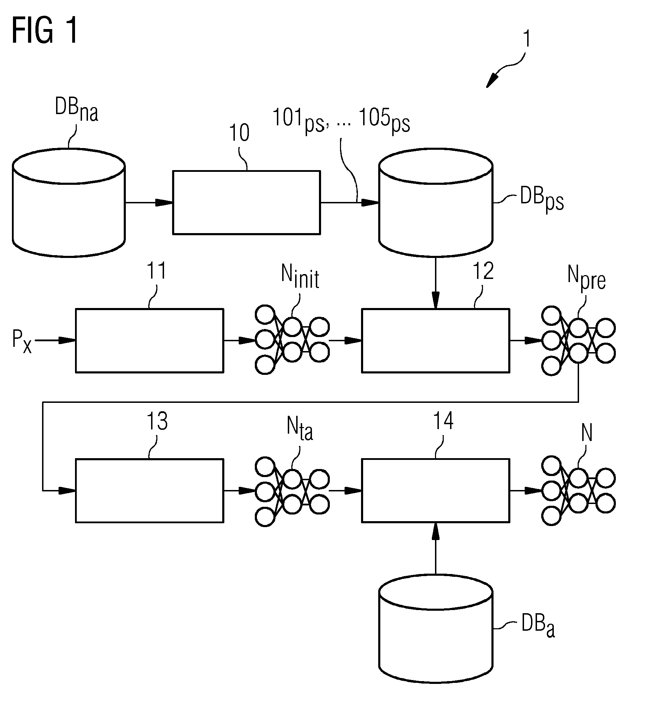

Fig. 1 illustrates the steps of the method according to the invention. Basic elements of a DNN training system 1 are: a module 11 for performing network initialization; a module 12 for performing supervised pre-training; a module 13 for performing task adaptation; and a module 14 for performing supervised training. Using any number of suitable architecture parameters Pₓ, the network initialization module 11 prepares an initialized network Nᵢₙᵢₜ.

The inventive approach is to use a large, essentially non-annotated database DBₙₐ of medical images belonging to the modality of interest, for use in pre-training of the initialized network Nᵢₙᵢₜ. For example, if a network is to be trained to perform lesion detection on digital breast tomosynthesis images, the medical image database DBₙₐ comprises a large number of non-annotated mammographic images. These can be 2D or 3D images, i.e. 2D X-ray projections or 3D CT volumes. In a first step, a target generation module 10 generates pseudo-targets 101ₚₛ, ..., 105ₚₛ for sub-regions of the images in the image database DBₙₐ. The output of this target generation stage 10 is a medical image database DBₚₛ that has been augmented by pseudo-targets.

A supervised pre-training of the initialized network Nᵢₙᵢₜ can now be performed by the supervised pre-training module 12, which uses the prepared database DBₚₛ as input to obtain a pre-trained network Nₚᵣₑ. The top layer of the pre-trained network Nₚᵣₑ is specific to the pseudo-task, i.e. the task of inferring one or more pseudo-targets from an input image.

In a subsequent task-adaptation stage, the pseudo-task-specific top layer of the pre-trained network Nₚᵣₑ is replaced by a task-specific top layer. Using the above task example, the task adaptation module 13 can replace the pseudo-task layer of the pre-trained network Nₚᵣₑ by a lesion-detection layer to give a task-adapted pre-trained network Nₜₐ. In a final stage, supervised training is performed by the training module 14, using a dataset DBₐ of annotated medical images. The output of this stage is a network N that has been trained to perform a specific task. Using the above task example, the network N has been trained to perform lesion detection on mammographic medical images.

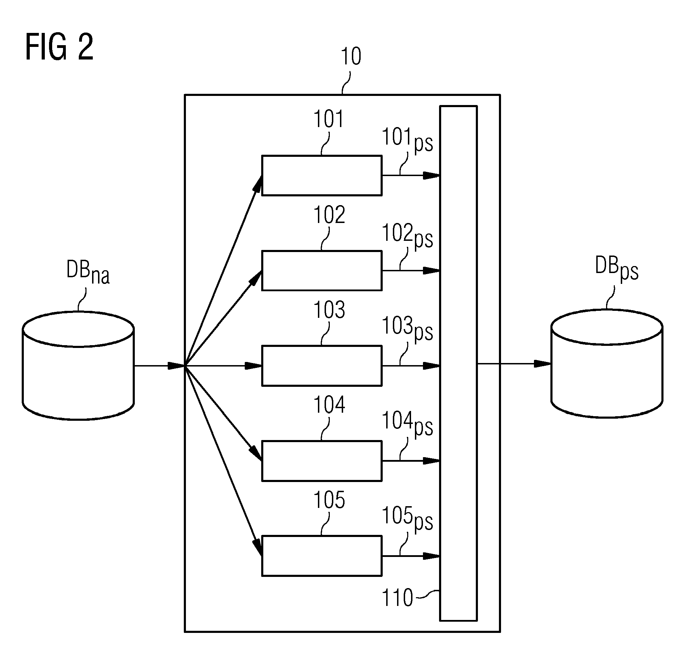

Fig. 2 shows a block diagram of the target generation module 10, which generates pseudo-targets 101ₚₛ, ..., 105ₚₛ for sub-regions of the images in the image database DBₙₐ. To this end, the target generation module 10 includes a number of sub-modules, for example a local property computation block 101; a sparse/compact encoding block 102; a cluster encoding block 103; a probability encoding block 104; a global property annotation block 105; etc. The pseudo-targets provided by each module can be combined as appropriate in a combination module 110. These submodules 101, ..., 105 are exemplary, and it will be understood that any number of other sub-modules could be used in addition or instead. The output of the target generation module 10 is a medical image database DBₚₛ comprising image sub-regions that have been augmented or annotated by pseudo-targets.

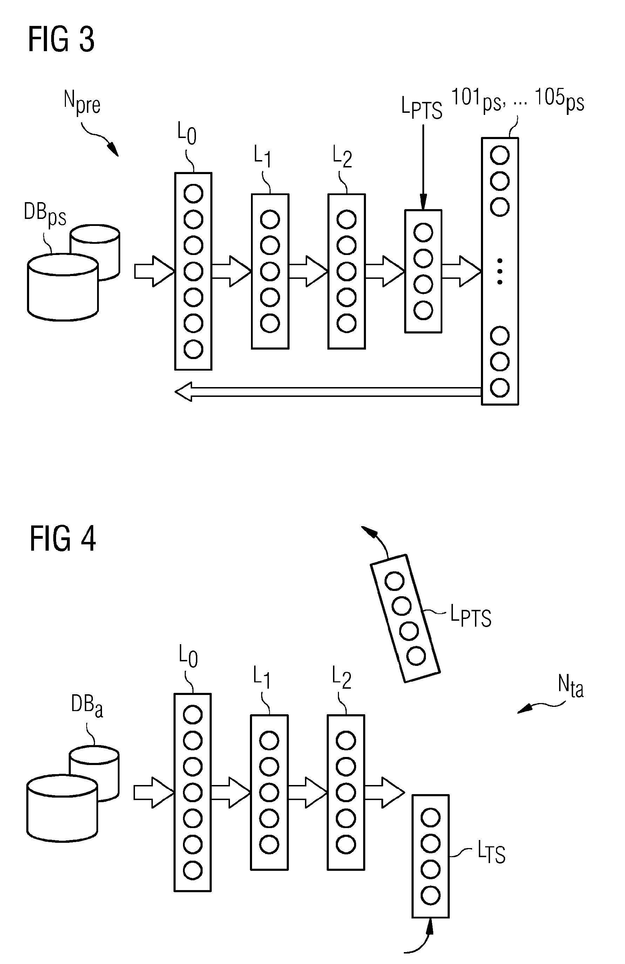

Fig. 3 schematically shows a supervised pre-training procedure in the method according to the invention. Here, a pre-trained deep neural network Nₚᵣₑ is represented by a number of layers L₀, L₁, ..., L_{PTS}. A bottom visible layer L₀ is "fed" by images or image sub-regions from the augmented image database DBₚₛ. A top hidden layer L_{PTS} is the pseudo-task-specific layer. A DNN can comprise any number of layers between the bottom layer L₀ and the top layer. In the supervised pre-training step, the task of the top hidden layer L_{PTS} is to arrive at the pseudo-targets. A technique of backward-propagation (as indicated by the backwards-pointing arrow) is used to find the best set of parameters that will enable the network to infer the pseudo-targets from the input images.

The outcome of the pre-training procedure is a deep neural network Nₚᵣₑ that can arrive at such annotations (i.e. annotations similar to the pseudo-targets) on its own, from medical images such as those in the non-annotated image database DBₙₐ.

Fig. 4 shows a subsequent stage in the method according to the invention. Here, the pseudo-task-specific top layer L_{PTS} of the pre-trained network is being replaced by a task-specific top layer L_{TS} to obtain a task-adapted network Nₜₐ. After task adaptation, supervised training is then performed on the task-adapted network Nₜₐ using an annotated medical image database to complete the network training procedure.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

### List of Reference Signs

- 1: training system
- 10: target generation module
- 11: initialization module
- 12: pre-training module
- 13: task adaptation module
- 14: training module
- 101ₚₛ, ... 105ₚₛ: pseudo-targets
- DBₙₐ: non-annotated dataset
- DBₚₛ: augmented dataset
- DBₐ: annotated dataset
- L_{PTS}: pseudo-task specific top layer
- L_{TS}: task-specific layer
- Pₓ: network parameters
- Ninit: initialized network
- Nₚᵣₑ: pre-trained network
- Nₜₐ: task-adapted network
- N: deep neural network

## Claims

1. A method of training a deep neural network (N) to perform a specific image processing task, which method comprises the steps of
- extracting a plurality of pseudo-targets (101_{PS}, ..., 105_{PS}) from a non-annotated set (DBₙₐ) of medical images;
- performing supervised pre-training on an initialized network (Nᵢₙᵢₜ) to obtain a pre-trained network (Nₚᵣₑ) with a pseudo-task specific top layer (L_{PTS});
- replacing the pseudo-task specific layer (L_{PTS}) by a task-specific layer (L_{TS}) ; and
- performing supervised training on the pre-trained network (Nₚᵣₑ) using an annotated set (DB) of medical images.

2. A method according to claim 1, wherein a pseudo-target (101_{PS}) characterizes a local image property.

3. A method according to claim 1 or claim 2, wherein a local image property comprises one or more of a gradient magnitude, a gradient orientation, a Laplacian of a Gaussian, a Canny edge, a local intensity statistic or a textural descriptor.

4. A method according to any of the preceding claims, wherein a pseudo-target (102_{PS}) comprises a set of projections of image sub-regions onto a basis computed by principal component analysis.

5. A method according to any of the preceding claims, wherein a pseudo-target (103_{PS}) comprises an intensity value of a cluster centre.

6. A method according to any of the preceding claims, wherein a pseudo-target (104_{PS}) comprises a probability value relating to the visual appearance of an image sub-region.

7. A method according to any of the preceding claims, wherein a pseudo-target (105_{PS}) comprises a global image property.

8. A method according to any of the preceding claims, wherein a pseudo-target (101_{PS}, ..., 105_{PS}) is obtained from an existing segmentation system.

9. A method according to any of the preceding claims, comprising an initial step of defining the top network layer (L_{PTS}) to address a pseudo-task of inferring pseudo-targets.

10. A method according to any of the preceding claims, wherein a training step comprises performing back-propagation and stochastic gradient descent.

11. A training system (1) realized to train a deep neural network (N) to perform a specific image processing task and comprising at least
- a target generation module (10) realized to extract a plurality of pseudo-targets (101_{PS}, ... 105_{PS}) from a non-annotated set of medical images (DBₙₐ);
- a pre-training module (12) realized to perform supervised pre-training on an initialized deep neural network (Nᵢₙᵢₜ) using the pseudo-targets (101_{PS}, ..., 105_{PS}) to obtain a pre-trained network (Nₚᵣₑ) ;
- a task adaptation module (13) realized to replace a pseudo-task specific layer (L_{PTS}) of the pre-trained network (Nₚᵣₑ) by a task-specific layer (L_{TS}) ; and
- a training module (14) realized to perform supervised training on the pre-trained network (Nₚᵣₑ).

12. A training system according to claim 11, realized to train the network (N) to perform a lesion detection task.

13. A training system according to claim 11 or claim 12, wherein the task-specific layer (L_{TS}) comprises a lesion-detection layer (L_{TS}).

14. A computer program product comprising a computer program that is directly loadable into a memory of a control unit of a training system and which comprises program elements for performing steps of the method according to any of claims 1 to 11 when the computer program is executed by the control unit of the training system.

15. A computer-readable medium on which is stored program elements that can be read and executed by a computer unit in order to perform steps of the method according to any of claims 1 to 11 when the program elements are executed by the computer unit.

## Amended claims

### Amended claims in accordance with Rule 137(2) EPC.

1. A method of training a deep neural network (N) to perform a specific image processing task, which method comprises the steps of
- extracting a plurality of pseudo-targets (101_{PS}, ..., 105_{PS}) from a non-annotated set (DBₙₐ) of medical images;
- performing supervised pre-training on an initialized network (Nᵢₙᵢₜ) using the pseudo-targets (101_{PS}, ..., 105_{PS}) to obtain a pre-trained network (Nₚᵣₑ) with a pseudo-task specific top layer (L_{PTS});
- replacing the pseudo-task specific layer (L_{PTS}) by a task-specific layer (L_{TS}); and
- performing supervised training on the pre-trained network (Nₚᵣₑ) using an annotated set (DB) of medical images.

2. A method according to claim 1, wherein a pseudo-target (101_{PS}) characterizes a local image property.

3. A method according to claim 1 or claim 2, wherein a local image property comprises one or more of a gradient magnitude, a gradient orientation, a Laplacian of a Gaussian, a Canny edge, a local intensity statistic or a textural descriptor.

4. A method according to any of the preceding claims, wherein a pseudo-target (102_{PS}) comprises a set of projections of image sub-regions onto a basis computed by principal component analysis.

5. A method according to any of the preceding claims, wherein a pseudo-target (103_{PS}) comprises an intensity value of a cluster centre.

6. A method according to any of the preceding claims, wherein a pseudo-target (104_{PS}) comprises a probability value relating to the visual appearance of an image sub-region.

7. A method according to any of the preceding claims, wherein a pseudo-target (105_{PS}) comprises a global image property.

8. A method according to any of the preceding claims, wherein a pseudo-target (101_{PS}, ..., 105_{PS}) is obtained from an existing segmentation system.

9. A method according to any of the preceding claims, comprising an initial step of defining the top network layer (L_{PTS}) to address a pseudo-task of inferring pseudo-targets.

10. A method according to any of the preceding claims, wherein a training step comprises performing back-propagation and stochastic gradient descent.

11. A training system (1) realized to train a deep neural network (N) to perform a specific image processing task and comprising at least
- a target generation module (10) realized to extract a plurality of pseudo-targets (101_{PS}, ... 105_{PS}) from a non-annotated set of medical images (DBₙₐ);
- a pre-training module (12) realized to perform supervised pre-training on an initialized deep neural network (Nᵢₙᵢₜ) using the pseudo-targets (101_{PS}, ..., 105_{PS}) to obtain a pre-trained network (Nₚᵣₑ);
- a task adaptation module (13) realized to replace a pseudo-task specific layer (L_{PTS}) of the pre-trained network (Nₚᵣₑ) by a task-specific layer (L_{TS}); and
- a training module (14) realized to perform supervised training on the pre-trained network (Nₚᵣₑ).

12. A training system according to claim 11, realized to train the network (N) to perform a lesion detection task.

13. A training system according to claim 11 or claim 12, wherein the task-specific layer (L_{TS}) comprises a lesion-detection layer (L_{TS}).

14. A computer program product comprising a computer program that is directly loadable into a memory of a control unit of a training system and which comprises program elements for performing steps of the method according to any of claims 1 to 11 when the computer program is executed by the control unit of the training system.

15. A computer-readable medium on which is stored program elements that can be read and executed by a computer unit in order to perform steps of the method according to any of claims 1 to 11 when the program elements are executed by the computer unit.
